(19) Europäisches Patentamt
European Patent Office
Office européen des brevets

(11) **EP 3 561 099 A1**

(12) **EUROPEAN PATENT APPLICATION**
published in accordance with Art. 153(4) EPC

(43) Date of publication:
**30.10.2019 Bulletin 2019/44**

(51) Int Cl.:
*C22C 38/00* *(2006.01)*   *C22C 38/02* *(2006.01)*
*C22C 38/04* *(2006.01)*   *C22C 38/06* *(2006.01)*
*C22C 38/12* *(2006.01)*   *C22C 38/60* *(2006.01)*
*C22C 38/22* *(2006.01)*   *C21D 8/02* *(2006.01)*
*C21D 9/46* *(2006.01)*

(21) Application number: **17883774.6**

(22) Date of filing: **11.12.2017**

(86) International application number:
**PCT/KR2017/014438**

(87) International publication number:
**WO 2018/117508 (28.06.2018 Gazette 2018/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **22.12.2016 KR 20160177186**

(71) Applicant: **Posco**
**Pohang-si, Gyeongsangbuk-do 37859 (KR)**

(72) Inventors:
• **JO, Min-Ho**
  **Pohang-si**
  **Gyeongsangbuk-do 37877 (KR)**
• **KIM, Jong-Hwa**
  **Pohang-si**
  **Gyeongsangbuk-do 37877 (KR)**

(74) Representative: **Zech, Stefan Markus**
**Meissner Bolte Patentanwälte**
**Rechtsanwälte Partnerschaft mbB**
**Postfach 86 06 24**
**81633 München (DE)**

(54) **COLD-ROLLED STEEL SHEET HAVING EXCELLENT CORROSION RESISTANCE AND FORMABILITY, AND METHOD FOR MANUFACTURING SAME**

(57)     Disclosed are a cold rolled steel sheet and a method for manufacturing same, the cold-rolled steel sheet: comprising, by wt%, 0.01% or less of C, 0.5% or less of Si, 0.1-0.5% of Mn, 0.1% or less of Al, 0.01% or less of P, 0.01% or less of S, 0.005% or less of N and 0.2-0.8% of Nb; comprising one or more of 0.5% or less of Sb, 3.0% or less of Cr, 1.0% or less of Mo and 0.5% or less of W; comprising the balance of Fe and inevitable impurities; and satisfying the following relation 1. [relation 1] $0.2 \leq [Sb]/0.5 + [Cr]/3.0 + [Mo]/1.0 + [W]/0.5 \leq 1.5$ (Here, [Sb], [Cr], [Mo], and [W] respectively mean the amounts (wt%) of the corresponding elements contained.)

**EP 3 561 099 A1**

**Description**

[Technical Field]

The present disclosure relates to a cold-rolled steel sheet having excellent corrosion resistance and formability, and a method of manufacturing the same. More particularly, the present disclosure relates to a cold-rolled steel sheet having excellent corrosion resistance and formability, which is usable as a material for an automobile exhaust system, and a method of manufacturing the same.

[Background Art]

When a car is driven, fossil fuel is burned in the engine of the car, and steam is generated along with toxic exhaust gases such as sulfuric acid gas, nitric acid gas and the like, and is discharged from an exhaust system. The internal temperature of the exhaust system changes repeatedly from a high temperature to a low temperature, depending on the running state. In the process of cooling from a high temperature to a low temperature below a dew point, condensate water is generated in the exhaust system. Such generated condensate water contains dissolved ions from exhaust gases such as $SO_3^{2-}$, $SO_4^{2-}$, $NO_2^-$, $NO_3^-$, $Cl^-$, $NH_4^+$ and the like.

Such condensed water containing these ions has a wide pH range depending on generation and drying, and creates a corrosive environment, which causes corrosion of steel sheets inside the exhaust system. Therefore, steel sheets used for automobile exhaust systems should have excellent corrosion resistance to prolong service life thereof. Further, to produce a required type of exhaust system, a predetermined amount or more of mechanical moldability is required, and thus, mechanical formability should be satisfied.

Currently, there are aluminum plated steel sheets and stainless steel sheets as materials for exhaust systems.

Patent Document 1 proposes a technique of improving corrosion resistance by hot-dip coating a steel sheet with Al to improve corrosion resistance of a cold-rolled steel sheet. An aluminum-plated steel sheet is plated with aluminum on general carbon steel, and has strong corrosion resistance by an $Al_2O_2$ passive film. Particularly, the corrosion resistance thereof against corrosion caused by salt that may occur on an outer surface of an exhaust system is significantly strong, and is also exhibited on an inner surface of the exhaust system within a predetermined pH range. However, there is a limitation in that Al may be eluted and removed at low pH, and once the Al is removed, corrosion resistance may no longer be exhibited.

To prevent the occurrence of such a problem, Patent Documents 2 and 3 propose a technique of suppressing corrosion in a low pH environment by adding Cu to a steel sheet, but have shortcomings in that addition of Cu has a limitation of accelerating corrosion in a high pH region.

On the other hand, Patent Document 4 proposes a technique for manufacturing a stainless steel sheet for an exhaust system by adding a large amount of various alloying elements including Cr, as a technique for greatly improving corrosion resistance of a steel sheet. The stainless steel sheet also has corrosion resistance by a $Cr_2O_3$ passive film at a certain range of pH against corrosion in the inside of the exhaust system. When the pH is low, the passive film is activated to lose corrosion resistance. However, when the pH rises, the Cr solidified in the steel sheet is oxidized again to passivate and recover the corrosion resistance. However, there is a disadvantage that rust may easily occur on the outer surface of the exhaust system due to salt, as compared with the case of aluminum plating. Furthermore, expensive alloying elements are added in large quantities, resulting in low economic efficiency.

Patent Document 5 describes a technique for manufacturing an Al-plated stainless steel sheet in order to reduce rebar corrosion of the external surface of the exhaust system, but Patent Document is also a technique using an expensive stainless steel sheet, which has a limit in economical efficiency.

(Patent Document 1) Korean Patent Registration Publication No. 10-0833050
(Patent Document 2) Korean Patent Registration Publication No. 10-0694697
(Patent Document 3) Korean Patent Registration Publication No. 10-1197955
(Patent Document 4) Korean Patent Laid-Open Publication No. 10-2015-0140423
(Patent Document 5) Korean Patent Registration Publication No. 10-1485643

[Disclosure]

[Technical Problem]

An aspect of the present disclosure is to provide a cold-rolled steel sheet having excellent corrosion resistance and formability, and a method of manufacturing the same.

[Technical Solution]

According to an aspect of the present disclosure, a cold rolled steel sheet includes, by wt%, 0.01% or less (excluding 0%) of carbon (C), 0.5% or less (excluding 0%) of silicon (Si), 0.1 to 0.5% of manganese (Mn), 0.1% or less (excluding 0%) of aluminum (Al), 0.01% or less (excluding 0%) of phosphorus (P), 0.01% or less of sulfur (S), 0.005% or less of nitrogen (N) and 0.2 to 0.8% of niobium (Nb), the cold rolled steel sheet including one or more of 0.5% or less of antimony (Sb), 3.0% or less of chromium (Cr), 1.0% or less of molybdenum (Mo) and 0.5% or less of tungsten (W), including a remainder of iron (Fe) and inevitable impurities, and satisfying the following relational expression 1: $0.2 \leq$ [Sb]/0.5 + [Cr]/3.0 + [Mo]/1.0 + [W]/0.5 $\leq 1.5$, where [Sb], [Cr], [Mo] and [W] are the amounts (wt%) of relevant elements, respectively.

According to an aspect of the present disclosure, a method of manufacturing a cold rolled steel sheet includes reheating a slab at a temperature of 1200°C or higher, the slab including, by wt%, 0.01% or less (excluding 0%) of carbon (C), 0.5% or less (excluding 0%) of silicon (Si), 0.1 to 0.5% (excluding 0%) of manganese (Mn), 0.1% or less (excluding 0%) of aluminum (Al), 0.01% or less (excluding 0%) of phosphorus (P), 0.01% or less of sulfur (S), 0.005% or less of nitrogen (N) and 0.2 to 0.8% of niobium (Nb), the slab including one or more of 0.5% or less of antimony (Sb), 3.0% or less of chromium (Cr), 1.0% or less of molybdenum (Mo) and 0.5% or less of tungsten (W), including a remainder of iron (Fe) and inevitable impurities, and satisfying the following relational expression 1: $0.2 \leq$ [Sb]/0.5 + [Cr]/3.0 + [Mo]/1.0 + [W]/0.5 $\leq 1.5$, where [Sb], [Cr], [Mo] and [W] are the amounts (wt%) of relevant elements, respectively; finish rolling the reheated slab at a temperature of Ar3°C or higher to obtain a hot-rolled steel sheet; coiling the hot-rolled steel sheet at a temperature ranging from 550 to 750°C; cold rolling the coiled hot-rolled steel sheet at a reduction ratio of 50 to 95% to obtain a cold-rolled steel sheet; and continuously annealing the cold-rolled steel sheet at a temperature ranging from 600 to 900°C.

[Advantageous Effects]

According to an embodiment in the present disclosure, a cold-rolled steel sheet may have excellent corrosion resistance and formability, and may be applied to a material for an automobile exhaust system.

The various and advantageous advantages and effects of the present disclosure are not limited to the above description, and may be more easily understood in the course of describing a detailed embodiment of the present disclosure.

[Best Mode for Invention]

In the case of a cold rolled steel sheet used as a material for an automobile exhaust system, the cold rolled steel sheet is required to have excellent corrosion resistance and formability. To increase the corrosion resistance of steel, a large amount of alloying elements is generally added. In this case, the cost of the material increases, resulting in a decrease in the economical efficiency and a decrease in the formability. Therefore, it is necessary to invent a method in which corrosion resistance and formability may be secured simultaneously with each other, without adding a large amount of alloying elements.

The inventors of the present disclosure have found that a cold rolled steel sheet having the above-mentioned target physical properties may be produced through the kind, content, and manufacturing conditions of an alloying element suitable for obtain the above object, thereby obtaining the present disclosure.

Hereinafter, a cold-rolled steel sheet having excellent corrosion resistance and formability according to an embodiment in the present disclosure will be described in detail.

First, alloy components and content ranges of a cold-rolled steel sheet according to an embodiment will be described in detail. It is to be noted that the content of each component described below is based on weight unless otherwise specified.

C: 0.01% or less (excluding 0%)

When the C content is excessive, the ductility is lowered, and not only the formability is significantly lowered but also the resistance to corrosion on an inner surface of an exhaust system is lowered. Thus, an upper limit of the content thereof may be limited to 0.01%, in detail, 0.008%, in more detail, 0.004%.

Si: 0.5% or less (excluding 0%)

Si is an element used as a decarburizing agent and contributes to enhancement of strength by solid solution strengthening. $SiO_2$ oxide produced on the surface may also serve to retard the corrosion of condensate water. However, if the amount thereof is excessive, the Si-based oxide is generated on the surface of the steel during annealing, which may cause defects in plating and may deteriorate plating properties. Therefore, an upper limit of the content may be 0.5%, in detail, 0.3%%, in further detail, 0.1%.

Mn: 0.1 to 0.5%

Mn is an element which prevents hot shortness caused by solid solution S by precipitating as MnS in combination with solid solution S in the steel. To obtain such an effect, the content thereof may be 0.1% or more. However, if the content exceeds 0.5%, the material may be hardened and the ductility may thus be significantly deteriorated.

Al: 0.1% or less (excluding 0%)

Al is an element having a very large deoxidizing effect and reacts with N in the steel to precipitate AlN, thereby preventing degradation of formability due to solid solution N. However, if added in a relatively large amount, the ductility is rapidly lowered, and thus, the content thereof is limited to 0.1% or less.

P: 0.01% or less (excluding 0%)

Addition of a predetermined amount or less of P may increase the strength while not significantly reducing ductility of the steel, but if the content of P is in excess of 0.01%, P segregates on the grain boundaries and hardens the steel. Thus, the content thereof may be limited to 0.01% or less.

S: 0.01% or less

S is an inevitable impurity element contained in the steel. Since S is an element which induces hot shortness at the time of solid solution, the precipitation of MnS should be induced through the addition of Mn. However, excessive precipitation of MnS hardens the steel, which is not appropriate. Therefore, the upper limit of the content thereof is limited to 0.01%.

N: 0.005% or less

N is also an impurity element which is inevitably contained in the steel. N which is not precipitated and present in a solid solution state deteriorates ductility and aging resistance, and also lower formability. Thus, the upper limit thereof is limited to 0.005%.

Nb: 0.2 to 0.8%

Nb is an element that binds with N at high temperature and easily precipitates as NbN, and is an effective element for controlling the solid solution N content. In addition, the solid soluble Nb remaining after bonding with N forms an oxide film of $Nb_2O_5$ on the surface, thereby greatly improving corrosion resistance in a corrosive environment. To obtain such an effect in the present disclosure, the content thereof may be 0.2% or more, in more detail, 0.21% or more. However, if the content thereof is excessive, the effect of improving corrosion resistance against the addition amount is insignificant and the formability is deteriorated. Therefore, the upper limit of the content is limited to 0.8%.

One or more of 0.5% or less of Sb, 3.0% or less of Cr, 1.0% or less of Mo and 0.5% or less of W

Sb tends to be concentrated on the surface of a steel sheet and easily forms an oxide, and the addition of a small amount of Sb significantly enhances corrosion resistance. However, if a large amount of Sb is added, the ductility of steel is greatly reduced, and thus, the content thereof may be limited to 0.5 or less.

Cr is dissolved in steel and exposed to air on the surface to easily form a $Cr_2O_3$ passive film to improve corrosion resistance, and is used as a representative corrosion resistance improving element, since the Cr may not significantly deteriorate the formability of a steel sheet, even when added in a large amount. If the content thereof exceeds 3.0%, the effect of improving the corrosion resistance is not large, as compared with the added amount, and the cost is increased. Thus, the upper limit thereof may be limited to 3.0%.

Mo is an element that improves corrosion resistance by increasing the resistance to pitting corrosion, and is significantly effective with a small amount of addition. However, if an excessive content thereof is added, the effect of improving corrosion resistance is low and the formability is poor. Thus, the upper limit thereof is limited to 1.0%.

W is an element which forms oxides with excellent corrosion resistance by oxidizing in air, and is effective when added in a small amount. However, if the content thereof is in a large amount, the effect of improving the corrosion resistance is low as compared with the added amount, and the formability is decreased. Thus, the content thereof is limited to 0.5%.

In addition to the composition described above, the remainder is Fe. In addition, inevitable impurities that are not intended may be mixed from a raw material or a surrounding environment in a general manufacturing process, which may not be excluded. These impurities are known to an ordinary person skilled in the art and thus, are not specifically referred to in this specification.

On the other hand, the contents of Sb, Cr, Mo and W may be controlled to satisfy the following relational expression 1 when designing the alloy of the steel as described above. The following relational expression 1 is a factorization of a combination of alloying elements capable of simultaneously improving the formability and corrosion resistance of the cold-rolled steel sheet. When the contents of Sb, Cr, Mo and W in the steel satisfy the following relational expression 1, required formability may be satisfied while effectively improving the corrosion resistance.

[Relational Expression 1]

$$0.2 \leq [Sb]/0.5 + [Cr]/3.0 + [Mo]/1.0 + [W]/0.5 \leq 1.5,$$

where [Sb], [Cr], [Mo] and [W] mean the contents (weight%) of relevant elements, respectively.

Hereinafter, further features of a cold-rolled steel sheet having excellent corrosion resistance and formability according to an embodiment in the present disclosure will be described in detail.

In the case of a cold-rolled steel sheet according to an embodiment in the present disclosure, a composite enriched layer of Nb and one or more of Sn, Cr, Mo and W is formed in a subsurface region of the cold rolled steel sheet in a thick direction in a corrosive environment. The composite enriched layer has a thickness of 1 $\mu$m or less (excluding 0 pm). These components are concentrated immediately below the surface under the corrosive environment to form an oxide layer, thereby reducing the rate of corrosion.

According to an example, when the corrosion test is carried out by the method B of JASO M 611-92, a maximum value of Nb content in the composite enriched layer of Nb and one or more of Sn, Cr, Mo and W may be 10 atomic% or more, and a maximum value of a sum of the contents of one or more of Sn, Cr, Mo and W may be 20 atomic% or more. When the content of Nb and the sum of contents of one or more of Sn, Cr, Mo and W in the composite enriched layer are controlled to be within the above range, the required corrosion resistance may be secured. On the other hand, the content of Nb and the content of one or more of Sn, Cr, Mo and W in the composite enriched layer are increased, this increase may be advantageous in terms of corrosion resistance. Thus, the upper limit thereof is not particularly limited.

The cold-rolled steel sheet according to an embodiment in the present disclosure has an advantage in terms of having excellent corrosion resistance. According to an example, when the cold-rolled steel sheet in an embodiment in the present disclosure is subjected to the corrosion test by the method B of JASO M 611-92, the corrosion loss may be 200 mg/cm$^2$ or less.

According to an example, the average grain size of crystal grains constituting a cold-rolled steel sheet according to an embodiment may be 9 $\mu$m or more. The average grain size of the crystal grains has a certain effect on the formability of the cold-rolled steel sheet. If the average grain size is less than 9 pm, the ductility may deteriorate and the formability may be deteriorated. On the other hand, as the average grain size of the crystal grains increases, corrosion resistance may increase. Thus, the upper limit of the average grain size is not particularly limited in the present disclosure. In this case, the average grain size refers to an average circular equivalent diameter of crystal grains observed in a cross section of a steel sheet.

The cold-rolled steel sheet according to an embodiment in the present disclosure has an advantage in terms of excellent processability. According to an example, the cold-rolled steel sheet according to an embodiment has an average value (rm) of a plasticity Lankford value (rm) of 1.8 or more and an elongation of 38% or more. In this case, the average value (rm) of the plasticity Lankford value may be calculated by the following equation 1.

$$[Equation\ 1]\ r_m = (r_0 + 2r_{45} + r_{90})/4$$

where $r_0$, $r_{45}$, and $r_{90}$ represent the plasticity Lankford values measured in the specimens taken from directions of 0, 45, and 90 degrees from a rolling direction, respectively.

The cold-rolled steel sheet according to an embodiment described above may be manufactured by various methods, and the manufacturing method thereof is not particularly limited. However, as a detailed example, the following method may be used.

Hereinafter, a method of manufacturing a cold-rolled steel sheet having excellent corrosion resistance and formability according to another embodiment in the present disclosure will be described in detail.

First, a slab having the above-mentioned component system is reheated to a temperature of 1200°C or higher.

Since most of precipitates present in a steel should be re-solidified, a temperature of 1200 °C or higher is required, and in more detail, the precipitates are heated to 1250 °C or higher for sufficient solidification of the precipitates.

Subsequently, the reheated slab is subjected to finish rolling at a temperature of Ar3°C or higher to obtain a hot-rolled steel sheet. The reason that the finishing rolling temperature is limited to a temperature of Ar3°C or higher is to perform rolling in an austenite single phase region.

Next, the hot-rolled steel sheet is coiled at 550 to 750°C. Since the N remaining in a solidified state may be additionally precipitated as AlN, through the coiling performed at 550 °C or higher, thereby ensuring excellent aging resistance. If coiling is carried out at less than 550°C, there is a risk that the formability may be deteriorated by solid soluble N remaining without being precipitated as AlN. If the steel sheet is rolled at a temperature exceeding 750°C, the crystal grains are coarsened and the cold rolling property is deteriorated.

Next, the coiled hot-rolled steel sheet is cold-rolled at a reduction ratio of 50 to 95% to obtain a cold-rolled steel sheet. The reduction rate determines the final thickness of the cold-rolled steel sheet. If the reduction rate is less than 50%, it is difficult to secure a final target thickness. If the reduction rate exceeds 95%, the rolling load is increased such that it is difficult to perform cold rolling.

Next, the cold-rolled steel sheet is continuously annealed at a temperature ranging from 600 to 900°C. By performing the continuous annealing at the annealing temperature, the crystal grains elongated upon cold rolling are recrystallized. If annealing at less than 600°C, recrystallization is insufficient, and thus, dislocations generated during cold rolling are not sufficiently removed and the ductility is lowered. If annealing is performed at a temperature exceeding 900°C, the crystal grains are coarsened and the strength is lowered and the formability is lowered. Recrystallization through continuous annealing may also be performed through box annealing at about 600 to 800°C.

Next, an operation of forming an aluminum-based plating layer on the surface of the cold-rolled steel sheet having been subjected to continuous annealing may be further performed, as necessary. In this case, the corrosion resistance may be significantly improved.

Hereinafter, embodiments of the present disclosure will be described in more detail with reference to examples . However, the description of these embodiments is intended only to illustrate the practice of the present disclosure, but the embodiments in the present disclosure are not limited thereto. The scope of the present disclosure is determined by the matters described in the claims and the matters reasonably deduced therefrom.


[Mode for Invention]


**(Embodiment)**


Steel slabs having the compositions shown in Tables 1 and 2 were reheated at 1250°C, hot rolled under the finish rolling temperature of Ar3 or higher, coiled at 620°C, cold rolled at a reduction ratio of 70% C, and continuous annealed at 830°C, to obtain a cold-rolled steel sheet having a final thickness of 1.2 mm. The corrosion resistance and formability of respectively manufactured cold-rolled steel sheets were evaluated by a simulation corrosion test of an automobile exhaust system and a room temperature tensile test, and the results are shown in Table 3 below.

The exhaust system corrosion test was carried out by the method B of JASO M 611-92, which simulates the internal corrosion environment of the exhaust system, and the corrosion loss after the corrosion test was measured. An average value $r_m$ of a plasticity Lankford value was also measured through the room temperature tensile test as a measure to evaluate the formability.

[Table 1]

| Steel Grade | Alloy Composition (wt%) | | | | | | |
|---|---|---|---|---|---|---|---|
| | C | Si | Mn | Al | P | S | N |
| Inventive Steel 1 | 0.003 | 0.050 | 0.212 | 0.033 | 0.008 | 0.009 | 0.003 |
| Inventive Steel 2 | 0.003 | 0.053 | 0.217 | 0.034 | 0.008 | 0.008 | 0.003 |
| Inventive Steel 3 | 0.003 | 0.053 | 0.206 | 0.030 | 0.009 | 0.008 | 0.003 |
| Inventive Steel 4 | 0.003 | 0.051 | 0.212 | 0.031 | 0.008 | 0.009 | 0.003 |
| Inventive Steel 5 | 0.003 | 0.052 | 0.213 | 0.034 | 0.009 | 0.008 | 0.003 |

(continued)

| Steel Grade | Alloy Composition (wt%) | | | | | | |
|---|---|---|---|---|---|---|---|
| | C | Si | Mn | Al | P | S | N |
| Inventive Steel 6 | 0.003 | 0.053 | 0.215 | 0.032 | 0.008 | 0.008 | 0.003 |
| Comparative Steel 1 | 0.003 | 0.050 | 0.208 | 0.034 | 0.008 | 0.009 | 0.003 |
| Comparative Steel 2 | 0.003 | 0.054 | 0.211 | 0.031 | 0.008 | 0.008 | 0.003 |
| Comparative Steel 3 | 0.003 | 0.055 | 0.219 | 0.031 | 0.008 | 0.008 | 0.003 |
| Comparative Steel 4 | 0.003 | 0.054 | 0.216 | 0.030 | 0.008 | 0.009 | 0.003 |
| Comparative Steel 5 | 0.003 | 0.054 | 0.219 | 0.034 | 0.009 | 0.008 | 0.003 |
| Comparative Steel 6 | 0.003 | 0.050 | 0.203 | 0.035 | 0.009 | 0.008 | 0.003 |
| Comparative Steel 7 | 0.021 | 0.055 | 0.209 | 0.032 | 0.009 | 0.008 | 0.003 |
| Comparative Steel 8 | 0.003 | 0.052 | 0.203 | 0.032 | 0.008 | 0.009 | 0.009 |

[Table 2]

| Steel Grade | Alloy Composition (Wt%) | | | | | Relational Expression 1 |
|---|---|---|---|---|---|---|
| | Nb | Sb | Cr | Mo | W | |
| Inventive Steel 1 | 0.214 | 0.154 | - | - | - | 0.31 |
| Inventive Steel 2 | 0.219 | - | 0.684 | - | - | 0.23 |
| Inventive Steel 3 | 0.214 | - | - | 0.329 | - | 0.33 |
| Inventive Steel 4 | 0.227 | - | - | - | 0.150 | 0.30 |
| Inventive Steel 5 | 0.215 | - | 1.120 | 0.450 | - | 0.82 |
| Inventive Steel 6 | 0.223 | 0.185 | 0.854 | 0.319 | 0.220 | 1.41 |
| Comparative Steel 1 | 0.218 | 0.031 | 0.251 | - | - | 0.15 |
| Comparative Steel 2 | 0.216 | - | - | 0.081 | 0.045 | 0.17 |
| Comparative Steel 3 | 0.230 | - | 0.315 | 0.057 | - | 0.16 |
| Comparative Steel 4 | 0.212 | 0.250 | 1.520 | 0.320 | 0.320 | 1. 97 |
| Comparative Steel 5 | 0.085 | - | 0.450 | 0.325 | - | 0.48 |
| Comparative Steel 6 | 0.981 | - | - | 0.309 | - | 0.31 |
| Comparative Steel 7 | 0.225 | - | - | 0.323 | - | 0.32 |
| Comparative Steel 8 | 0.214 | - | - | 0.311 | - | 0.31 |

[Table 3]

| Steel Grade | Composite enriched Layer (atomic%) | | Average Grain Size of Crystal Grains ($\mu$m) | Corrosion Loss (mg/cm$^2$) | $r_m$ | Elongation (%) |
|---|---|---|---|---|---|---|
| | Maximum Value of Nb Content | Maximum value of sum of contents of one or more of Sn, Cr, Mo and W | | | | |
| Inventive Steel 1 | 15.7 | 26.7 | 10.8 | 182 | 1.88 | 39.6 |
| Inventive Steel 2 | 14.2 | 22.3 | 10.7 | 178 | 1.89 | 39.7 |

(continued)

| Steel Grade | Composite enriched Layer (atomic%) | | Average Grain Size of Crystal Grains ($\mu$m) | Corrosion Loss (mg/cm$^2$) | $r_m$ | Elongation (%) |
|---|---|---|---|---|---|---|
| | Maximum Value of Nb Content | Maximum value of sum of contents of one or more of Sn, Cr, Mo and W | | | | |
| Inventive Steel 3 | 15.6 | 29.1 | 10.8 | 187 | 1.91 | 39.9 |
| Inventive Steel 4 | 14.2 | 26.6 | 10.6 | 190 | 1.87 | 39.5 |
| Inventive Steel 5 | 13.7 | 32.4 | 10.5 | 171 | 1.85 | 38.4 |
| Inventive Steel 6 | 14.6 | 36.8 | 10.5 | 159 | 1.80 | 38.0 |
| Comparative Steel 1 | 14.1 | 13.2 | 10.8 | 224 | 1.92 | 40.4 |
| Comparative Steel 2 | 13.6 | 14.6 | 10.8 | 211 | 1.91 | 39.9 |
| Comparative Steel 3 | 14.8 | 11.3 | 10.4 | 236 | 1.89 | 40.1 |
| Comparative Steel 4 | 13.1 | 32.6 | 9.8 | 151 | 1.70 | 36.4 |
| Comparative Steel 5 | 7.7 | 32.8 | 10.2 | 245 | 1.88 | 39.1 |
| Comparative Steel 6 | 24.6 | 32.6 | 9.6 | 188 | 1.42 | 37.6 |
| Comparative Steel 7 | 13.3 | 28.0 | 8.2 | 602 | 1.11 | 22.1 |
| Comparative Steel 8 | 13.2 | 28.2 | 8.5 | 485 | 1.25 | 25.6 |

As shown in Table 3, inventive steels 1 to 6 satisfying both the alloy composition and the manufacturing conditions proposed in an embodiment of the present disclosure all had a corrosion loss of mg/cm$^2$ or less as good corrosion resistance, and had $r_m$ of 1.8 or more and elongation of 38% or more as excellent formability.

In comparative steels 1 to 3, the relational expression 1 of Sb, Cr, Mo and W represents less than 0.2, in which the formability thereof is excellent, while the corrosion loss exceeds 200 mg/cm$^2$, and thus, the corrosion resistance is inferior to the inventive steels.

In the case of the comparative steel 4, large amounts of Sb, Cr, Mo and W are added, and thus, the relational expression 1 represents more than 1.5, in which the corrosion loss is 200mg/cm$^2$, exhibiting excellent corrosion resistance. However, since the alloy amount is relatively great, $r_m$ is less than 1.8 and an elongation is less than 38%, in which the formability is inferior as the cases of the inventive steels. As the content of the additive element increases, $r_m$ and elongation decrease. Thus, it can be understood that the content of the additive element is required to be limited.

In the case of the comparative steel 5, a corrosion loss is 245 mg/cm$^2$ due to a small amount of addition of Nb, and thus, corrosion resistance is inferior to the invention steels. On the other hand, the comparative steel 6 has a large amount of added Nb, having excellent corrosion resistance, but has a decreased $r_m$ value, having poor formability. In addition, since the effect of improving the corrosion resistance is not great as compared with the added amount, it is not necessary to add a large amount in consideration of economical efficiency.

In the case of the comparative steels 7 and 8, large amounts of C and N were added, respectively. As a result, large amounts of carbides or nitrides were precipitated, and as a result, both corrosion resistance and formability were greatly degraded. The precipitate produced in this case is NbC or NbN. Since Nb is essentially added for the effect of improving the corrosion resistance in the present disclosure as described above, the contents of C and N needs are strictly limited.

The excellent corrosion resistance of the inventive steels is based on the type and ratio of the oxide layer constituting the surface portion generated in the corrosive environment. In Table 3, a maximum value of Nb content, and a maximum value of the total content of Sb, Cr, Mo and W, in a corrosion interface 1 $\mu$m are shown as the result obtained by cutting a surface portion of the specimen to measure components . As the case in which corrosion resistance is high, the maximum value of the Nb content is 10% or more, and the maximum value of the sum of the contents of Sb, Cr, Mo and W is 20% or more, in atomic%. It can be seen that the corrosion rate is reduced as the components are concentrated on the surface in a corrosive environment to form an oxide layer.

In addition, when the grain size is 9 $\mu$m or more as shown in Table 3, the elongation is high and the formability is good. If the grain size is less than 9 $\mu$m, the elongation is relatively low and the formability is poor.

While embodiments have been illustrated and described above, it will be apparent to those skilled in the art that modifications and variations could be made without departing from the scope of the present disclosure as defined by the appended claims.

**Claims**

1. A cold rolled steel sheet comprising:
   by wt%, 0.01% or less (excluding 0%) of carbon (C), 0.5% or less (excluding 0%) of silicon (Si), 0.1 to 0.5% of manganese (Mn), 0.1% or less (excluding 0%) of aluminum (Al), 0.01% or less (excluding 0%) of phosphorus (P), 0.01% or less of sulfur (S), 0.005% or less of nitrogen (N) and 0.2 to 0.8% of niobium (Nb), the cold rolled steel sheet comprising one or more of 0.5% or less of antimony (Sb), 3.0% or less of chromium (Cr), 1.0% or less of molybdenum (Mo) and 0.5% or less of tungsten (W), comprising a remainder of iron (Fe) and inevitable impurities, and satisfying the following relational expression 1: $0.2 \leq [Sb]/0.5 + [Cr]/3.0 + [Mo]/1.0 + [W]/0.5 \leq 1.5$, where $[Sb]$, $[Cr]$, $[Mo]$ and $[W]$ are the amounts (wt%) of relevant elements, respectively.

2. The cold rolled steel sheet of claim 1, wherein a composite enriched layer of Nb and one or more of Sn, Cr, Mo and W is formed in a subsurface region of the cold rolled steel sheet in a thick direction in a corrosive environment, wherein the composite enriched layer has a thickness of 1 $\mu$m or less (excluding 0 pm).

3. The cold rolled steel sheet of claim 2, wherein a maximum value of Nb content in the composite enriched layer of Nb and one or more of Sn, Cr, Mo and W is 10 atomic% or more, and a maximum value of a sum of the contents of one or more of Sn, Cr, Mo and W is 20 atomic% or more, when a corrosion test is performed by Method B of JASO M 611-92.

4. The cold rolled steel sheet of claim 1, wherein an average grain size of crystal grains constituting the cold-rolled steel sheet is 9 $\mu$m or more.

5. The cold rolled steel sheet of claim 1, wherein the cold-rolled steel sheet has a corrosion loss of 200mg/cm$^2$ or less when subjected to a corrosion test by Method B of JASO M 611-92.

6. The cold rolled steel sheet of claim 1, wherein the cold rolled steel sheet has an average value ($r_m$) of a plasticity Lankford value of 1.8 or more and an elongation of 38% or more.

7. The cold rolled steel sheet of claim 1, wherein the cold rolled steel sheet is provided with an aluminum-based plating layer formed on a surface thereof.

8. A method of manufacturing a cold rolled steel sheet, comprising:

   reheating a slab at a temperature of 1200°C or higher, the slab including, by wt%, 0.01% or less (excluding 0%) of carbon (C), 0.5% or less (excluding 0%) of silicon (Si), 0.1 to 0.5% (excluding 0%) of manganese (Mn), 0.1% or less (excluding 0%) of aluminum (Al), 0.01% or less (excluding 0%) of phosphorus (P), 0.01% or less of sulfur (S), 0.005% or less of nitrogen (N) and 0.2 to 0.8% of niobium (Nb),
   the slab comprising one or more of 0.5% or less of antimony (Sb), 3.0% or less of chromium (Cr), 1.0% or less of molybdenum (Mo) and 0.5% or less of tungsten (W), comprising a remainder of iron (Fe) and inevitable impurities, and satisfying the following relational expression 1: $0.2 \leq [Sb]/0.5 + [Cr]/3.0 + [Mo]/1.0 + [W]/0.5 \leq 1.5$, where $[Sb]$, $[Cr]$, $[Mo]$ and $[W]$ are the amounts (wt%) of relevant elements, respectively;
   finish rolling the reheated slab at a temperature of Ar3°C or higher to obtain a hot-rolled steel sheet;
   coiling the hot-rolled steel sheet at a temperature ranging from 550 to 750°C;

cold rolling the coiled hot-rolled steel sheet at a reduction ratio of 50 to 95% to obtain a cold-rolled steel sheet; and continuously annealing the cold-rolled steel sheet at a temperature ranging from 600 to 900°C.

9. The method of manufacturing a cold rolled steel sheet of claim 8, further comprising forming an aluminum-based plating layer on a surface of the continuously annealed cold-rolled steel sheet after the continuously annealing.

## INTERNATIONAL SEARCH REPORT

| International application No. |
| --- |
| PCT/KR2017/014438 |

**A. CLASSIFICATION OF SUBJECT MATTER**

*C22C 38/00(2006.01)i, C22C 38/02(2006.01)i, C22C 38/04(2006.01)i, C22C 38/06(2006.01)i, C22C 38/12(2006.01)i, C22C 38/60(2006.01)i, C22C 38/22(2006.01)i, C21D 8/02(2006.01)i, C21D 9/46(2006.01)i*

According to International Patent Classification (IPC) or to both national classification and IPC

**B. FIELDS SEARCHED**

Minimum documentation searched (classification system followed by classification symbols)

C22C 38/00; C21D 8/02; C23G 1/08; C22C 38/38; C22C 38/04; C22C 38/02; C22C 38/06; C22C 38/12; C22C 38/60; C22C 38/22; C21D 9/46

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: cold rolled steel plate, niobium, antimony, chrome, molybdenum, tungsten, enrichment, corrosion

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-1999-0074795 A (NISSHIN STEEL CO., LTD.) 05 October 1999<br>See claims 1-3, 9-11. | 1-9 |
| A | JP 05-230595 A (KAWASAKI STEEL CORP.) 07 September 1993<br>See paragraphs [0070], [0071] and claims 1, 5. | 1-9 |
| A | KR 10-2014-0041290 A (HYUNDAI STEEL COMPANY) 04 April 2014<br>See paragraphs [0123]-[0126] and claims 1-4. | 1-9 |
| A | JP 2009-030147 A (SUMITOMO METAL IND. LTD.) 12 February 2009<br>See paragraphs [0093], [0094] and claims 2-6. | 1-9 |
| A | JP 2012-132093 A (JFE STEEL CORP.) 12 July 2012<br>See paragraphs [0020], [0022] and claims 4, 5. | 1-9 |

☐ Further documents are listed in the continuation of Box C.   ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 19 MARCH 2018 (19.03.2018) | **19 MARCH 2018 (19.03.2018)** |

| Name and mailing address of the ISA/KR | Authorized officer |
| --- | --- |
| Korean Intellectual Property Office<br>Government Complex-Daejeon, 189 Seonsa-ro, Daejeon 302-701, Republic of Korea | |
| Facsimile No. +82-42-481-8578 | Telephone No. |

Form PCT/ISA/210 (second sheet) (January 2015)

**INTERNATIONAL SEARCH REPORT**
Information on patent family members

International application No.

**PCT/KR2017/014438**

| Patent document cited in search report | Publication date | Patent family member | Publication date |
|---|---|---|---|
| KR 10-1999-0074795 A | 05/10/1999 | CA 2231760 A1<br>KR 10-0264258 B1<br>US 2001-001049 A1 | 11/09/1999<br>16/08/2000<br>10/05/2001 |
| JP 05-230595 A | 07/09/1993 | CA 2076284 A1<br>CA 2076284 C<br>DE 69216503 T2<br>EP 0528407 A1<br>EP 0528407 B1<br>JP 02978007 B2<br>KR 10-1995-0007783 B1<br>US 5290370 A | 20/02/1993<br>19/11/1996<br>24/04/1997<br>24/02/1993<br>08/01/1997<br>15/11/1999<br>18/07/1995<br>01/03/1994 |
| KR 10-2014-0041290 A | 04/04/2014 | KR 10-1455470 B1 | 27/10/2014 |
| JP 2009-030147 A | 12/02/2009 | JP 04816595 B2<br>JP 05278505 B2<br>JP 2011-236505 A | 16/11/2011<br>04/09/2013<br>24/11/2011 |
| JP 2012-132093 A | 12/07/2012 | CN 102959129 A<br>EP 2612956 A1<br>EP 2612956 B1<br>JP 05835558 B2<br>KR 10-2013-0031284 A<br>TW 201224215 A<br>TW I454594 B<br>US 2013-0149529 A1<br>WO 2012-029631 A1 | 06/03/2013<br>10/07/2013<br>01/06/2016<br>24/12/2015<br>28/03/2013<br>16/06/2012<br>01/10/2014<br>13/06/2013<br>08/03/2012 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100833050
- KR 100694697
- KR 101197955
- KR 1020150140423
- KR 101485643